# EUROPEAN PATENT SPECIFICATION

(11) **EP 0 397 255 B1**
(45) Date of publication and mention of the grant of the patent: **14.12.1994**
(21) Application number: 90201132.9
(22) Date of filing: 04.05.1990
(51) Int. Cl.: G01N 35/00, B65H 3/24, F16H 19/00

(54) **Flexible pusher blade and housing**
Biegsames Schiebeblatt und Gehäuse dazu
Lame poussoir flexible, et son boîtier

(30) Priority: 09.05.1989 US 349451; 28.03.1990 US 500650
(43) Date of publication of application: 14.11.1990
(73) Proprietor: Johnson & Johnson Clinical Diagnostics, Inc., Rochester New York 14650 (US)
(72) Inventor: Shaw, James David, c/o Eastman Kodak Company, Rochester, New York 14650 (US); Muszak, Fank Martin, c/o Eastman Kodak Company, Rochester, New York 14650 (US); Heavner, David Allen, c/o Eastman Kodak Company, Rochester, New York 14650 (US)
(74) Representative: Mercer, Christopher Paul

(56) References cited:
- EP-A- 0 046 087
- EP-A- 0 248 455
- FR-A- 1 278 640
- FR-A- 1 297 285
- FR-A- 2 512 680
- US-A- 4 424 191
- MACHINE DESIGN, vol. 36, no. 1, 2nd January 1964, page 162, Cleveland, US ; "Flexible Rack Rolls Around Corner"

## Description

The present invention is directed to pusher blades for moving slide-like elements, particularly in analyzers.

Pusher blades are the conventional mechanisms for moving slide-type test elements in an analyzer from one location to another. For example, such blades have been used to push a test element out of one or two stacks of elements into another part of an analyzer so that the test element can be further processed to detect an analyte in a body liquid deposited on the test element. An example of such a pusher blade is disclosed in US-A-4512952.

As such analyzers become more and more involved in their processing of the test elements, the blades must traverse greater and greater distances. For example, in US-A-4512952, the blade must traverse not only one stack of elements to push an element out of such stack, but in addition, it must traverse a second adjacent stack which is an alternate supply of elements. The conventional construction for the blade in all such instances is a rigid one. Thus, the problem becomes one of providing a sufficient, usually horizontal, space in which a longer rigid blade can operate. This in turn makes the analyzer longer or wider in order to accommodate such a long rigid pusher blade.

Therefore, prior to this invention it has been a problem to provide a pusher blade construction which will produce the longer traversals now being required of such blades, without unduly extending the dimensions of the analyzer just to accommodate a long, rigid blade.

It is therefore an object of the present invention to provide a novel pusher blade and associated housing.

More specifically, in accordance with one aspect of the invention, there is provided a pusher blade arrangement for transferring a test element from one location to another, the arrangement including a pusher blade comprising a first relatively stiff end portion shaped to engage a test element; a second end portion opposite to the first end portion; and a body portion between the end portions; characterized in that at least the body portion and the second end portion being sufficiently flexible as to bend about a radius of curvature of no greater than about 20cm without exceeding its elastic limit; and
guide means for guiding the body portion and the second end portion around the radius of curvature, so that the second end portion is directed to occupy a plane which is skewed to the plane occupied by the first end portion whilst the stiff end portion is able to reciprocate along a linear path.

In accordance with a second aspect of the present invention, there is provided apparatus for supplying test elements from at least two stacks of test elements to an analyzer, the apparatus including a housing, and a supply of two stacks;
characterized in that the apparatus includes a pusher blade arrangement as described above, wall means for separating the stacks within the housing into two separate environments, and sealing means for preventing substantial intermixing of the separate environments of the separated stacks when the blade intersects either of the stacks along its path of travel.

In accordance with a third aspect of the present invention, there is provided a pusher blade mechanism for pushing flat slide-like articles from one location to another, the mechanism including:-
a pusher blade;
drive means for moving the blade towards and away from slide-like elements; and
back-up means positioned opposite the drive means for keeping the blade engaged with the drive means;
characterized in that it includes a flexible pusher blade arrangement as described above and in that the the back-up means includes a clutch which allows the blade to disengage from the drive means in the presence of increased resistance so that damage due to a jam is minimized.

It is an advantageous feature of the invention that a pusher blade is provided with a long traverse capability, without extending unduly the dimensions of the analyzer.

It is a related advantageous feature of the invention that a pusher blade and housing are provided which wrap the blade around the rest of the analyzer, thus conserving space.

Yet another advantageous feature of the invention is that such a pusher blade can be provided inexpensively.

A further advantageous feature is that such a pusher blade can operate with two different environments and not cause substantial intermixing of the environments.

The present invention will now be described by way of example only with reference to the accompanying drawings in which:-
Figure 1 is a perspective view of a pusher blade constructed in accordance with the present invention, together with its drive means;
Figure 2 is a fragmentary elevational view of the stiff end of the pusher blade;
Figure 3 is a sectioned view taken generally along the line III-III of Figure 2;
Figure 4 is a fragmentary, partially schematic, elevational view, partly in section, illustrating the use of the invention in an analyzer;
Figure 5 is an elevational view similar to that shown in Figure 4 which illustrates an alternate embodiment of the present invention in more detail;
Figure 6 is a fragmentary elevational view similar to that shown in Figure 5 which illustrates some of the parts in the next step of the operation wherein a test element is being moved by the pusher blade;
Figure 7 is an elevational view similar to that shown in Figure 5, but illustrating another embodiment of a pusher blade according to the present invention; and
Figures 8 and 9 are fragmentary views similar to Figure 4, but illustrating a further embodiment of a pusher blade according to the present invention.

The invention is described hereinafter in connection with a pusher blade used in a clinical analyzer, specifically to move a test element out of a stack of elements disposed in a particular arrangement. In addition, the invention is useful for the movement of a slide-type test element between any two locations, regardless of whether one of them is a stack of elements, and regardless of whether, if used with a stack of elements, such stacks come in adjacent pairs or are located in any particular place in an analyzer.

Orientations such as "up", "down", and "horizontal" are used in connection with the orientations of the parts during their normal use.

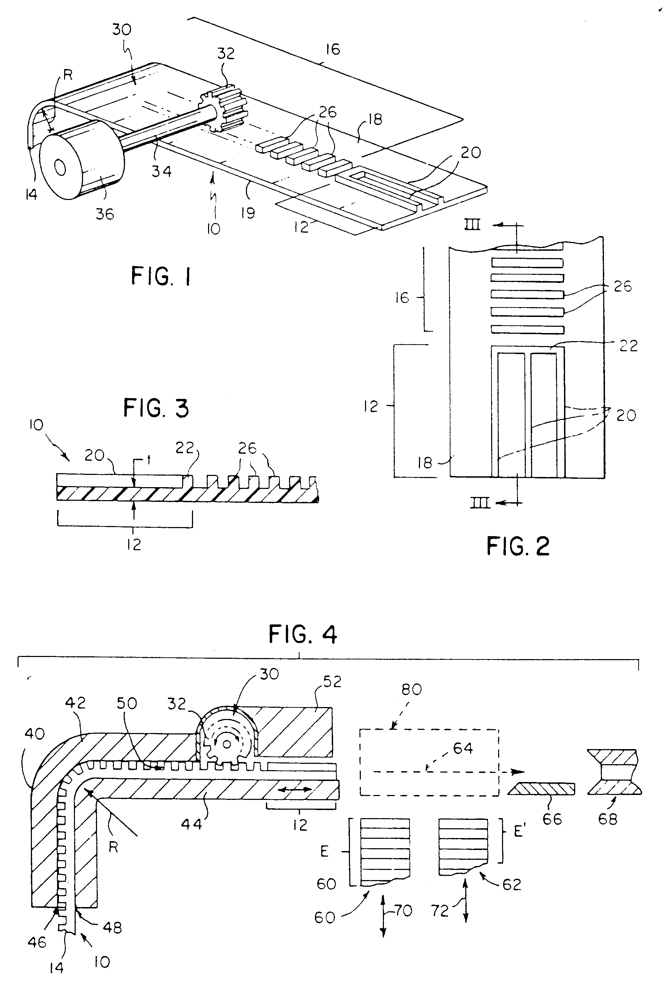

An elongate pusher blade 10 according to the invention is shown in Figure 1. The blade 10 includes a test-element engaging end 12, an end 14 opposite to end 12, and a body portion 16 between and connecting the ends 12, 14. Blade 10 has an upper surface 18 and an opposite lower surface 19. In accordance with the invention, end 12 is constructed to be relatively stiff, whereas body portion 16 and end 14 are constructed to be flexible. Preferably, they are sufficiently flexible as to readily bend without damage around a corner having a radius of curvature R which is no greater than about 20cm, that is, without exceeding the elastic limit of the material. A preferred range for the radius of curvature is between 3cm and 20cm, with a radius of curvature of 4cm being most preferred.

Most preferably, the flexibility of the blade is achieved by molding it out of a relatively thin flexible material, such as nylon. Thickness t, as shown in Figure 3, of between about 0.7mm and about 0.8mm is particularly useful. Such materials are also advantageous because of they are inexpensive.

To render end 12 relatively stiff or rigid, longitudinal ribs 20 are molded into that end on upper surface 18. Such ribs 20 are two or three in number (as shown in Figures 1 and 2), and extend in the direction of the primary length of the blade 10 if laid flat, i.e. along the length of the blade 10, thus providing the stiffness. Preferably, the ribs 20 terminate and are joined together adjacent body portion 16 at a transverse rib 22, as is shown more clearly in Figure 2.

Optionally, end 12 can include an aperture extending transversely through it (not shown) to allow a sensor to detect when end 12 is present and thus in position to initiate ejection of a test element.

To translate blade 10 forwards and backwards, driving means 30 are provided which engage with associated transverse ribs 26 formed on the upper surface 18 of blade 10, as shown in Figure 1. Driving means 30 comprise a pinion gear 32 mounted on a shaft 34, and a suitable motor 36, such as a stepper motor. Ribs 26 are transverse ribs extending upwardly away from upper surface 18 to form a rack element, and can be readily formed as part of the molding of blade 10. Ribs 26 are spaced apart a distance which mates with pinion gear 32.

A guide housing 40 is provided, as shown in Figure 4, for receiving blade 10 and for bending it about radius R, preferably to form an approximate right-angle bend. Housing 40 also houses drive means 30. More specifically, upper portion 42 and lower portion 44 of housing 40 provide opposed wall surfaces, such as surfaces 46 and 48, which form a closed curved path 50 of radius R. Blade 10 reciprocates along this path, as shown, in response to the driving action of pinion 32. Housing 42 is shaped to accommodate pinion gear 32. The portion 52 of upper housing portion 42 which extends beyond gear 32 towards the rest of the analyzer is linear since it receives the stiff end 12 of blade 10 which will not bend.

Alternatively (not shown), the bend provided by radius R can be some angle considerably different from 90°, for example 30° or 60°. An approximate 90° bend is preferred, however, to curl the extension 14 of the blade 10 downwards (as shown in Figure 4), thus minimizing the horizontal extension of the apparatus containing the blade 10.

In one use of the invention, stacks 60, 62 (Figure 4) of test elements E and E′ are disposed adjacent housing portion 52. These stacks 60, 62 are to be operated upon by the pusher blade 10. Test elements E or E′ can be ejected by blade 10 from either stack 60, 62 in the direction indicated by arrow 64, and transferred to other locations, such as a preheater platform 66 adjacent to an incubator 68. Any mechanism for positioning such stacks 60, 62 adjacent to housing portion 52 can be used, as well as any mechanism for raising and lowering the stacks (as indicated by arrows 70, 72) to intersect the path of arrow 64.

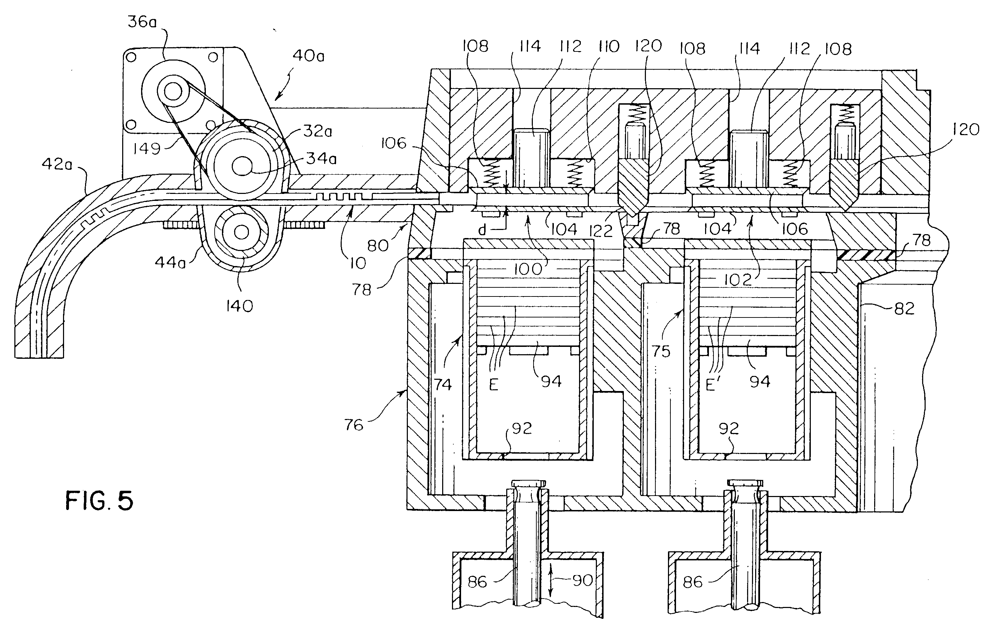

A useful example of such mechanisms is described in US-4512952. Briefly, as shown in Figure 5, such stacks can be disposed in cartridges 74 and 75 mounted in concentric rings on a rotor 76. Such rings can be connected to rotate together, as shown, or they can be independently mounted to rotate separately (not shown). Rotor 76 seals at bearing surfaces 78 against a stationary bridging member 80, and is driven by a suitable mechanism, (not shown) preferably attached at wall 82. The rotor 76 rotates about an axis of rotation which is to the right or left of the stacks shown in Figure 4. If it is to the right, the axis is preferably centered on incubator 68.

To raise and lower cartridges 74, 75, a plunger 86 is provided at a station adjacent to blade housing 40a, associated with each of the two rings which rotate above the plungers 86. (Parts similar to those shown in the previous embodiment of Figures 1 to 4 are given the same reference numeral to which the suffix "a" is appended.)

The plungers 86 are activated by a mechanism such as is shown in US-A-4512952, to move up and down, in the direction indicated by arrow 90, into and out of aperture 92 of a cartridge 74, 75, to push against the follower element 94 used to prevent remaining elements E or E′ from falling to the bottom of the cartridge 74, 75.

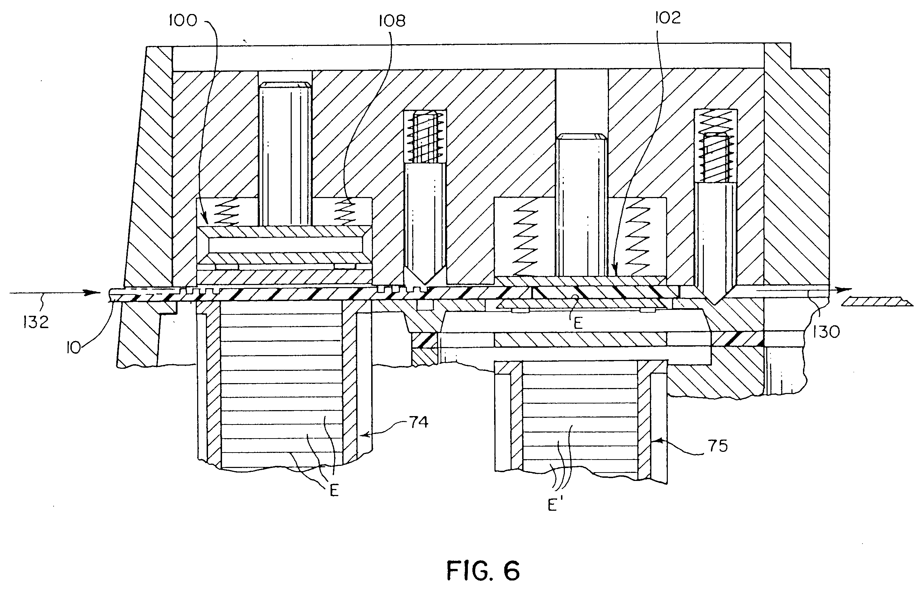

Bridging member 80 is constructed to allow blade 10 to bridge over either cartridge 74 or 75 (whichever one is not dispensing a test element). To this end, a shuttle 100 is mounted above the position occupied by cartridge 74, and a separate shuttle 102 above the position occupied by cartridge 75, when either cartridge is otherwise in position to dispense a test element. Each shuttle 100, 102 comprises a bottom plate 104, a top plate 106 spaced from the bottom plate a distance d which will accommodate blade 10 and a test element E, E′. A pair of compression springs 108 hangs each shuttle 100, 102 from upper surface 110, and a centering rod 112 which slides up and down in aperture 114 in surface 110. Springs 108 can be coil springs or leaf springs. Optionally, a spring-biased sealing member 120 is provided between the shuttles 100, 102 to allow separate environments to be provided for the two rings. This is particularly the case if each ring of stacks is separately rotatable. Member 120 is tapered at 122 to allow a pushed test element and blade 10 to cam it upward, as shown in Figure 6.

In operation, as shown in Figure 6, the bridging member 80 works by having a cartridge from which a test element is to be ejected, push its associated shuttle (shuttle 100 is pushed up by a cartridge 74 in this Figure) out of the way against spring 108, while the other shuttle (102 here) remains in place to bridge over the space under which cartridge 75 are located. Blade 10 is thus able to pass over both sets of rings of cartridges 74, 75, and through cartridge 74, to eject element E towards preheater platform 66, in the direction of arrow 130. Alternatively, only a cartridge 75 can be elevated against its shuttle 102, and blade 10 pushed, through shuttle 100 and into cartridge 75, in the direction of arrow 132, to eject an element E′.

Any additional support can be provided in the blade housing 40a besides that shown in Figure 4. Thus, as shown in Figure 5, a pinch roller 140 can be included in housing portion 44a, mounted opposite to the pinion gear 32a mounted in housing portion 42a of housing 40a. In this alternative embodiment, motor 36a is offset from drive shaft 34a and connected thereto by drive belt 149.

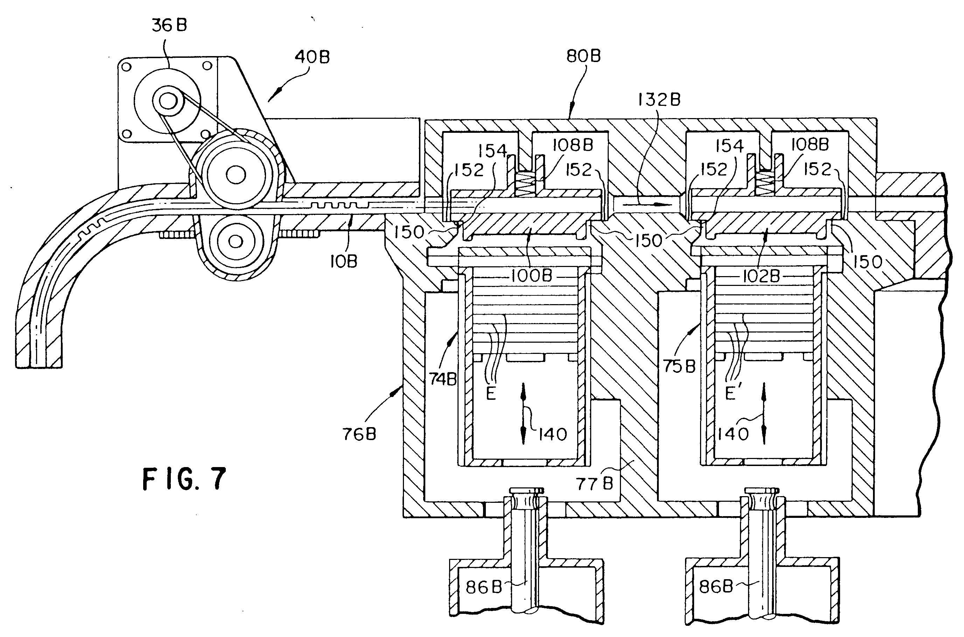

It is not essential that the atmosphere intermixing-preventing seals between the two stacks be the type which needs to be cammed out of the way by the pusher blade. An alternative is shown in Figure 7. Parts similar to those previously described bear the same reference numerals, to which the distinguishing suffix B is appended.

Thus, housing 40B has a pusher blade 10B driven by motor 36B, and either cartridge 74B or 75B is elevated, in the direction shown by arrows 140, by plungers 86B, as before, into the path 132B of the blade 10B. Rotor 76B allows two rows of cartridges to be rotated into the position shown in Figure 7; and wall 77B keeps the two rows of cartridges separate. Bridging member 80B covers the cartridges and provides the bridging means for path 132B, generally as before. Displaceable shuttle members 100B and 102B allow a cartridge to be inserted into path 132B, or alternatively act as the guide for blade 10B, shuttle 102B, and also for a test element E.

However, unlike the previous embodiment, no separate, cammable sealing means is required in bridging member 80B between shuttles 100B and 102B. Instead, the shuttle members 100, 102 themselves act to prevent intermixing of the atmospheres. In particular, member 80B is provided with apertures 150 into which a cartridge 74B, 75B is insertable by plunger 86B. Each aperture 150 has a sealing seat 152 surrounding it which mates with the annular undersurface 154 of either shuttle 100B or 102B when the shuttle is in the "down" position, as shown. Springs 108B bias shuttle members 100B and 102B downwardly, as before, to seal on seats 152. When a shuttle is raised by a cartridge 74B, 75B from seat 152, there is a slight release of atmosphere from one side of rotor 76B to the other, over wall 77B, but this is unsubstantial.

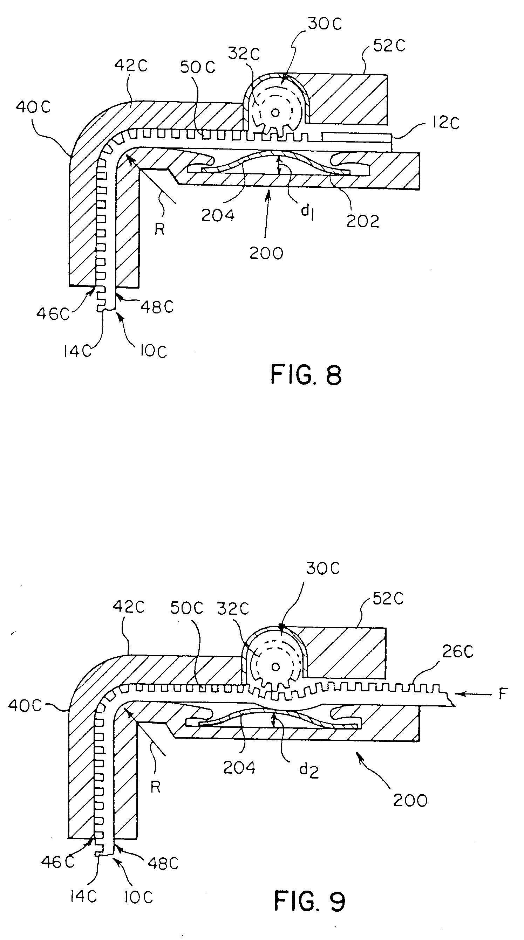

In most instances, the blade mechanism described above functions very well to transfer the test elements as described. In rare instances, however, the relatively rigid backing member for the blade, e.g., housing 44 or roller 140, as shown in Figures 4 and 5, will cause the blade to become damaged if a jam occurs. In particular, a test element can become jammed after it is pushed out of a cartridge. The resulting increase in resistance force against the blade will damage the blade if motor 36 or 36a continues to drive. Figures 8 and 9 provide an embodiment which avoids this problem. Parts similar to those previously described bear the same reference numeral, to which the distinguishing suffix C is appended.

Thus, in Figure 8, blade 10C is housed in housing 40C and driven by driving means 30C as before, with all but end 12C of the blade being flexible. Thus, blade 10C follows a curved path 50C as previously described. However, the back-up member includes a clutch 200, which releases its pressure pushing blade 10C into contact with pinion gear 32C, in the event a jam occurs at end 12C. More specifically, clutch 200 is preferably a spring 202, such as a leaf spring under compression, with a projecting portion 204 which pushes blade 10C against pinion gear 32C with sufficient force to normally keep the blade engaged. A useful example of the force of spring portion 204 is about 6.7N (1.51bf). This leaves portion 204 spaced distance d₁ from its housing.

Clutch 200 functions as follows (with reference to Figure 9): If a jam occurs so that a resistant force F in excess of the spring force, e.g., 6.7N (1.51bf) occurs, then spring 202 buckles sufficiently to reduce distance d₁ to d₂, allowing the flexible blade 10C to itself buckle a sufficient distance as to disengage ribs 26C from pinion gear 32C. As a result, pinion gear 32C can continue to turn without permanently bending blade 10C or breaking off any of the ribs on the blade or the teeth on pinion gear 32C.

## Claims

1. A pusher blade arrangement for transferring a test element (E, E′) from one location to another, the arrangement including a pusher blade comprising a first relatively stiff end portion (12; 12a; 12B; 12C) shaped to engage a test element (E, E′); a second end portion (14; 14a; 14B; 14C) opposite to the first end portion (12; 12a; 12B; 12C); and a body portion (16; 16a; 16B; 16C) between the end portions (12, 14; 12a, 14a; 12B, 14B; 12C, 12C); characterized in that at least the body portion (16; 16a; 16B; 16C) and the second end portion (14; 14a; 14B; 14C) are sufficiently flexible as to bend about a radius of curvature (R) of no greater than about 20cm without exceeding its elastic limit; and in that it includes
guide means (40, 42, 44; 40a, 42a, 44a; 40B; 40C, 42C) for guiding the body portion (16; 16a; 16B; 16C) and the second end portion (14; 14a; 14B; 14C) around the radius of curvature (R), so that the second end portion (14; 14a; 14B; 14C) is directed to occupy a plane which is skewed to the plane occupied by the first end portion (12; 12a; 12B; 12C) whilst the stiff end portion (12; 12a; 12B; 12C) is able to reciprocate along a linear path.

2. An arrangement according to claim 1, wherein at least the body portion (16; 16a; 16B; 16C) includes means (26; 26C) for engaging drive means (32, 34, 36; 32a, 34a, 36a, 150; 36B; 32C) For reciprocating the first end portion (12; 12a; 12B; 12C) within a plane.

3. An arrangement according to claim 2, wherein the engaging means (26; 26C) includes a rack for engaging a pinion gear (32; 32a; 32C) in the drive means (32, 34, 36; 32a, 34a, 36a, 150; 36B; 32C).

4. An arrangement according to any one of claims 1 to 3, wherein the guide means (40a, 42a, 44a; 40B) define a path of travel for the pusher blade (10; 10B; 10C) and are shaped to define an angled bend in the path.

5. An arrangement according to claim 4, wherein the angled bend forms approximately a right-angle.

6. An arrangement according to any one of claims 1 to 5, wherein the radius of curvature (R) of the bend is about 4cm.

7. A housing for a pusher blade according to any one of claims 1 to 6.

8. A housing according to claim 7, further including stack locating means (80; 80B) for locating at least one stack (74, 75; 74B, 75B) of test elements (E, E′) adjacent the guide means (40a, 42a, 44a; 40B) and in position to cause the stiff end portion (12; 12a; 12B; 12C) to engage a test element (E, E′) in either stack (74, 75; 74B, 75B) and to remove it from that stack (74, 75; 74B, 75B).

9. A housing according to claim 8, wherein the stack locating means (80; 80B) comprise housing means which separates one stack (74, 75; 74B, 75B) from the other, the housing means including sealing means (120; 152) for preventing substantial intermixing of the separate environments of the separated stacks (74, 75; 74B, 75B) when the stiff end portion (12a; 12B) is guided into engagement with either of the stacks (74, 75; 74B, 75B).

10. Apparatus for supplying test elements (E, E′) from at least two stacks (74B, 75B) of test elements (E, E′) to an analyzer, the apparatus including a housing (76B) and a supply of two stacks (74B, 75B);
characterized in that the apparatus includes a pusher blade arrangement according to any one of claims 1 to 6, wall means (77B) for separating the stacks (74B, 75B) within the housing (76B) into two separate environments, and sealing means (152) for preventing substantial intermixing of the separate environments of the separated stacks (74B, 75B) when the blade (10B) intersects either of the stacks (74B, 75B) along its path of travel.

11. Apparatus according to claim 10, wherein the wall means (77B) includes an aperture (150) adjacent the predetermined path into which a stack of elements (E, E′) can be inserted, the sealing means (100B, 102B, 152) include a displaceable member (100B, 102B) seated in the aperture (150), a sealing seat (152) at the aperture (150) for sealingly receiving the member (100B, 102B), and biasing means (108B) for biasing the member (100B, 102B) against the seat (152), each member (100B, 102B) having a slot formed therein through which the pusher blade (10B) is guided to engage a test element (E, E′) from either stack (74B, 75B).

12. A pusher blade mechanism for pushing flat slide-like articles (E, E′) from one location to another, the mechanism including:-
a pusher blade;
drive means (32C) for moving the blade (10C) towards and away from slide-like elements (E, E′); and
back-up means (200, 202, 204) positioned opposite the drive means (32C) for keeping the blade (10C) engaged with the drive means (32C);
characterized in that it include a flexible pusher blade arrangement according to any one of claims 1 to 6 and in that the back-up means (200, 202, 204) includes a clutch (200) which allows the blade (10C) to disengage from the drive means (32C) in the presence of increased resistance so that damage due to a jam is minimized.

13. A pusher blade mechanism according to claim 12, wherein the clutch (200) comprises a spring (202) which pushes the blade (10C) against the drive means (32C), the spring (202) having sufficient flexibility as to collapse away from the drive means (32C) in the presence of increased resistance applied to the blade (10C) so that the blade (10C) can buckle against the spring (202) without breaking, permanently bending, or damaging the drive means (32C).

14. A pusher blade mechanism according to claim 13, wherein the spring (202) is compressed against the blade (10C) with a force of about 6.7N.

## Patentansprüche

1. Fördervorrichtung zum Bewegen eines Testelements (E, E′) von einer Stelle zu einer anderen , wobei die Vorrichtung einen Schieber umfaßt, der einen ersten, relativ steifen Endabschnitt (12; 12a; 12B; 12C) aufweist, der so ausgebildet ist, daß er mit einem Testelement (E, E′) in Eingriff bringbar ist; einen zweiten Endabschnitt (14; 14a; 14B; 14C) gegenüber dem ersten Endabschnitt (12; 12a; 12B; 12C); und einen Hauptabschnitt (12, 14; 12a, 14a; 12B, 14B; 12C, 14C); dadurch gekennzeichnet, daß mindestens der Hauptabschnitt (16; 16a; 16B; 16C) und der zweite Endabschnitt (14; 14a; 14B; 14C) derart biegsam ausgebildet sind, daß sie zu einem Kreisbogen mit einem Radius (R) von höchstens 20 cm biegbar sind, ohne ihre Elastizitätsgrenze zu überschreiten, und daß die Vorichtung Führungsmittel (40, 42, 44; 40a, 42a, 44a; 40B, 42B, 44B) aufweist, die den Hauptabschnitt (16; 16a; 16B; 16C) und den zweiten Endabschnitt (14; 14a; 14B; 14C) auf dem Kreisbogen führen, so daß der zweite Endabschnitt (14; 14a; 14B; 14C) in einer gegenüber der vom ersten Endabschnitt (12; 12a; 12B; 12C) eingenommenen Ebene im Winkel verlaufenden Ebene befindet, wohingegen sich der erste Endabschnitt (12; 12a; 12B; 12C) auf einer Geraden bewegt.

2. Vorrichtung nach Anspruch 1, dadurch gekennzeichnet, daß mindestens der Hauptabschnitt (16; 16a; 16B; 16C) Mittel (26; 26C) aufweist, die in eine Antriebseinrichtung (32, 34, 36; 32a, 34a, 36a, 150; 36B; 32C) eingreifen, um den ersten Endabschnitt (12; 12a; 12B; 12C) in einer Ebene hin- und herzubewegen.

3. Vorrichtung nach Anspruch 2, dadurch gekennzeichnet, daß die Eingriffsmittel (26; 26C) eine Zahnstange aufweisen, die in ein Ritzel (32; 32a; 32C) der Antriebseinrichtung (32, 34, 36; 32a, 34a, 36a, 150; 36B; 32C) eingreifen.

4. Vorrichtung nach einem der Ansprüche 1 - 3, dadurch gekennzeichnet, daß die Führungsmittel (40a, 42a, 44a; 40B) für den Schieber (10; 10B; 10C) eine Bewegungsbahn bilden und so ausgebildet sind, daß diese Bahn eine Biegung aufweist.

5. Vorrichtung nach Anspruch 4, dadurch gekennzeichnet, daß die Biegung etwa im rechten Winkel verläuft.

6. Vorrichtung nach einem der Ansprüche 1 - 5, dadurch gekennzeichnet, daß der Krümmungsradius (R) der Biegung etwa 4 cm beträgt.

7. Vorrichtung nach einem der Ansprüche 1 - 6, gekennzeichnet durch ein Gehäuse für die Fördervorrichtung.

8. Gehäuse nach Anspruch 7, gekennzeichnet durch Mittel (80; 80b) zum Haltern mindestens eines Stapels (74, 75; 74B, 75B) von Testelementen (E, E′) benachbart zu den Führungsmitteln (40a, 42a, 44a; 40B) und in einer Stellung, in der der steife Endabschnitt (12; 12a; 12B; 12C) in einem der Stapel (74, 75; 74B, 75B) ein Testelement (E, E′) erfaßt und aus dem Stapel herausfördert.

9. Gehäuse nach Anspruch 8, dadurch gekennzeichnet, daß die Stapelhalterungsmittel (80; 80b) ein Gehäuse aufweisen, das einen Stapel (74, 75; 74B, 75B) vom anderen trennt, wobei das Gehäuse Dichtungsmittel (120; 152) besitzt, die ein Vermischen der Umgebungsbedingungen der getrennten Stapel (74, 75; 74B, 75B) im wesentlichen verhindern, wenn der Endabschnitt (12a; 12B) mit einem der beiden Stapel (74, 75; 74B, 75B) in Eingriff gebracht wird.

10. Vorrichtung zum Zuführen von Testelementen (E, E′) aus mindestens zwei Stapeln (74B, 75B) von Testelementen (E, E′) zu einem Analysegerät, mit einem Gehäuse (76B) und einem Vorrat von zwei Stapeln (74B, 65B), gekennzeichnet durch eine Vorrichtung nach einem der Ansprüche 1 - 6, Wandungsmittel (77B), die die Stapel (74B, 75B) im Gehäuse (76B) in zwei Bereiche mit unterschiedlichen Umgebungsbedingungen trennt, und Dichtungsmittel (152), die ein Vermischen der Umgebungsbedingungen der Stapel (74B, 75B) im wesentlichen verhindern, wenn der Schieber (10B) entlang seiner Bewegungsbahn einen der beiden Stapel (74B, 75B) durchquert.

11. Vorrichtung nach Anspruch 10, dadurch gekennzeichnet, daß die Wandungsmittel (77B) neben der vorgegebenen Bewegungsbahn eine Öffnung (150) aufweisen, in die ein Stapel Testelemente (E, E′) eingeführt werden kann, daß die Dichtungsmittel (100B, 102B, 152) ein verschiebbares, in der Öffnung (150) angeordnetes Teil (100B, 102B), eine an der Öffnung (150) angeordnete Dichtfläche (152), die mit dem Teil (100B, 102B) einen dichten Verschluß bildet, und Federmittel (108B), die das Teil (100B, 102B) gegen die Dichtfläche (152) drücken, aufweist, wobei jedes Teil (100B, 102B) mit einem Schlitz versehen ist, durch den der Schieber (10B) hindurchführbar ist, um von einem der beiden Stapel (74B, 75B) ein Testelement (E, E′) zu erfassen.

12. Fördervorrichtung zum Verschieben von flachen, plättchenförmigen Gegenständen (E, E′) von einer Stelle zu einer anderen, mit
- einem Schieber;
- einer Antriebseinrichtung (32C), die den Schieber (10C) an plättchenförmige Elemente (E, E′) heran- und davon wegbewegt; und
- gegenüber der Antriebseinrichtung (32C) angeordnete Andruckmittel (200, 202, 204), die den Schieber (10C) mit der Antriebseinrichtung in Eingriff halten;
dadurch gekennzeichnet, daß sie eine biegsamen Schieber nach einem der Ansprüche 1 - 6 aufweist, und daß die Andruckmittel (200, 202, 204) mit einer Kupplung (200) versehen sind, mittels derer der Schieber (10C) bei Schwergängigkeit außer Eingriff mit der Antriebseinrichtung gelangt, um die Möglichkeit einer Beschädigung aufgrund von Staus auf ein Minimum zu reduzieren.

13. Fördervorrichtung nach Anspruch 12, dadurch gekennzeichnet, daß die Kupplung (200) eine Feder (202) aufweist, die den Schieber (10C) an die Antriebseinrichtung (32C) andrückt, wobei die Feder (202) so viel Flexibilität aufweist, daß sie bei erhöhter Schwergängigkeit des Schiebers (10C) dem auf die Antriebseinrichtung (32C) ausgeübten Gegendruck nachgibt, so daß sich der Schieber (10C) in Richtung der Feder (202) durchbiegen kann, ohne zu brechen, sich dauerhaft zu verformen oder die Antriebseinrichtung (32C) zu beschädigen.

14. Fördervorrichtung nach Anspruch 13, dadurch gekennzeichnet, daß die Feder (202) mit einer Kraft von etwa 6,7 N gegen den Schieber (10C) drückt.

## Revendications

1. Ensemble à palette de poussée destiné au transfert d'un élément de test (E et E′) d'un emplacement à un autre, l'ensemble comprenant une palette de poussée comprenant une première partie d'extrémité relativement rigide (12 ; 12a ; 12B ; 12C) ayant une configuration lui permettant de coopérer avec un élément de test (E, E′), une seconde partie d'extrémité (14 ; 14a ; 14B ; 14C) opposée à la première partie d'extrémité (12 ; 12a ; 12B ; 12C), et une partie de corps (16 ; 16a ; 16B ; 16C) placée entre les parties d'extrémité (12, 14 ; 12a, 14a ; 12B, 14B ; 12C, 14C), caractérisé en ce que la partie de corps (16 ; 16a ; 16B ; 16C) au moins et la seconde partie d'extrémité (14 ; 14a ; 14B ; 14C) sont suffisamment flexibles pour fléchir avec un rayon de courbure (R) qui ne dépasse pas 20 cm environ sans dépasser sa limite élastique, et en ce qu'il comprend
un dispositif (40, 42 ; 44 ; 40a, 42a, 44a ; 40B ; 40C, 42C) de guidage de la partie de corps (16 ; 16a ; 16B ; 16C) et de la seconde partie d'extrémité (14 ; 14a ; 14B ; 14C) autour du rayon de courbure (R) afin que la seconde partie d'extrémité (14 ; 14a ; 14B ; 14C) soit dirigée dans un plan qui est incliné par rapport au plan occupé par la première partie d'extrémité (12 ; 12a ; 12B ; 12C) alors que la partie d'extrémité rigide (12 ; 12a; 12B ; 12C) peut se déplacer en translation suivant un trajet rectiligne.

2. Ensemble selon la revendication 1, dans lequel la partie de corps (16 ; 16a ; 16B ; 16C) au moins comprend un dispositif (26 ; 26C) destiné à être au contact d'un dispositif d'entraînement (32, 34, 36 ; 32a, 34a, 36a, 150 ; 36B ; 32C) en translation de la première partie d'extrémité (12 ; 12a ; 12B ; 12C) dans un plan.

3. Ensemble selon la revendication 2, dans lequel le dispositif de coopération (26 ; 26C) comprend une crémaillère destinée à coopérer avec un pignon (32 ; 32a ; 32C) du dispositif d'entraînement (32, 34, 36 ; 32a, 34a, 36a, 150 ; 36B ; 32C).

4. Ensemble selon l'une quelconque des revendications 1 à 3, dans lequel le dispositif de guidage (40a, 42a, 44a ; 40B) délimite un trajet de déplacement de la palette de poussée (10 ; 10B ; 10C) et a une configuration formant un coude délimitant un angle dans le trajet.

5. Ensemble selon la revendication 4, dans lequel le coude forme approximativement un angle droit.

6. Ensemble selon l'une quelconque des revendications 1 à 5, dans lequel le rayon de courbure (R) du coude est d'environ 4 cm.

7. Boîtier pour palette de poussée selon l'une quelconque des revendications 1 à 6.

8. Boîtier selon la revendication 7, comprenant en outre un dispositif (80 ; 80B) de positionnement de piles destiné à positionner au moins une pile (74, 75 ; 74B, 75B) d'éléments de test (E, E′) près du dispositif de guidage (40a, 42a, 44a ; 40B) et en position telle que la partie d'extrémité rigide (12 ; 12a ; 12B ; 12C) vient au contact d'un élément de test (E, E′) de l'une ou l'autre pile (74, 75 ; 74B, 75B) et qu'il est retiré de la pile (74, 75 ; 74B, 75B).

9. Boîtier selon la revendication 8, dans lequel le dispositif (80 ; 80B) de positionnement de piles comprend un dispositif à boîtier qui sépare une pile (74, 75 ; 74B, 75B) de l'autre, le dispositif à boîtier comprenant un dispositif d'étanchéité (120 ; 152) destiné à empêcher un mélange important des atmosphères séparées des piles séparées (74, 75 ; 74B, 75B) lorsque la partie rigide d'extrémité (12a ; 12B) est guidée au contact de l'une des piles (74, 75 ; 74B, 75B).

10. Appareil de transmission d'éléments de test (E, E′) à partir d'au moins deux piles (74B, 75B) d'éléments de test (E, E′) vers un analyseur, l'appareil comprenant un boîtier (76B) et une réserve de deux piles (74B, 75B),
caractérisé en ce que l'appareil comprend un ensemble à palette de poussée selon l'une quelconque des revendications 1 à 6, un dispositif (77B) à paroi de séparation des piles (74B, 75B) dans le boîtier (76B) dans deux atmosphères séparées, et un dispositif (152) d'étanchéité destiné à empêcher un mélange notable des atmosphères séparées des piles séparées (74B, 75B) lorsque la palette (10B) recoupe l'une des piles (74B, 75B) le long de son trajet de déplacement.

11. Appareil selon la revendication 10, dans lequel le dispositif à paroi (77B) a un orifice (150) près du trajet prédéterminé dans lequel peut être introduit une pile d'éléments (E, E′), le dispositif d'étanchéité (100B, 102B, 152) comprenant un organe mobile (100B, 102B) logé dans l'orifice (150), un siège d'étanchéité (152) placé dans l'orifice (150) et destiné à loger de manière étanche l'organe (100B, 102B), un dispositif (108B) de rappel de l'organe (100B, 102B) contre le siège (152), chaque organe (100B, 102B) ayant une fente formée pour le guidage de la palette de poussée (10B) afin qu'elle soit au contact d'un élément de test (E, E′) de l'une ou l'autre pile (74B, 75B).

12. Mécanisme à palette de poussée d'articles plats analogues à des lames (E, E′) d'un emplacement à un autre, le mécanisme comprenant :
une palette de poussée,
un dispositif (32C) d'entraînement destiné à déplacer la palette (10C) en translation par rapport aux éléments (E, E′) analogues à des lames, et
un dispositif d'appui (200, 202, 204) placé en face du dispositif d'entraînement (32C) afin qu'il maintienne la palette (10C) au contact du dispositif d'entraînement (32C),
caractérisé en ce qu'il comprend un ensemble à palette flexible de poussée selon l'une quelconque des revendications 1 à 6, et en ce que le dispositif d'appui (200, 202, 204) comporte un embrayage (200) qui permet à la palette (10C) de se séparer du dispositif d'entraînement (32C) en présence d'une plus grande résistance afin qu'une détérioration due à un coincement soit minimale.

13. Mécanisme à palette de poussée selon la revendication 12, dans lequel l'embrayage (200) comporte un ressort (202) qui pousse la palette (10C) contre le dispositif d'entraînement (32C), le ressort (202) ayant une flexibilité suffisante pour s'affaisser en s'écartant du dispositif d'entraînement (32C) en présence d'une plus grande résistance appliquée à la palette (10C), si bien que la palette (10C) peut fléchir vers le ressort (202) sans se rompre, se déformer de manière permanente ou détériorer le dispositif d'entraînement (32C).

14. Mécanisme à palette de poussée selon la revendication 13, dans lequel le ressort (202) est comprimé contre la palette (10C) avec une force d'environ 6,7 N.
